# EUROPEAN PATENT SPECIFICATION

(11) **EP 3 940 675 B1**
(45) Date of publication and mention of the grant of the patent: **18.02.2026**
(21) Application number: 21186253.7
(22) Date of filing: 16.07.2021
(51) Int. Cl.: G09B 21/04, G09B 21/00

(54) **INTERCOMMUNICATION DEVICE COMPRISING AN ASSISTIVE DEVICE FOR HEARING-IMPAIRED PEOPLE**
KOMMUNIKATIONSVORRICHTUNG MIT EINER HILFSVORRICHTUNG FÜR HÖRBEHINDERTE PERSONEN
DISPOSITIF D'INTERCOMMUNICATION COMPRENANT UN DISPOSITIF D'ASSISTANCE POUR PERSONNES MALENTENDANTES

(30) Priority: 17.07.2020 IT 202000017464
(43) Date of publication of application: 19.01.2022
(73) Proprietor: Vimar S.p.A., 36063 Marostica (VI) (IT)
(72) Inventor: SEGATO, Francesco, 35030 Rubano (PD) (IT); TURCATO, Marco, 36060 Romano d'Ezzelino (VI) (IT); GASPAROTTO, Davide, 36064 Colceresa (VI) (IT); MARTINELLO, Denis, 36015 Schio (VI) (IT); NICHELE, Valter, 36063 Marostica (VI) (IT); TURCATO, Stefano, 36063 Marostica (VI) (IT)
(74) Representative: Locas, Davide

(56) References cited:
- JP-A- 2011 071 894
- KR-B1- 101 887 891
- US-A- 5 913 881
- US-A1- 2016 165 018
- VIMAR: "Broaden your horizons with Elvox video door entry system - Vimar energia positiva", 7 March 2019 (2019-03-07), pages 1 - 7, XP055772602, Retrieved from the Internet <URL:https://www.vimar.com/en/int/broaden-your-horizons-with-elvox-video-door-entry-system-14974132.html> [retrieved on 20210204]

## Description

The present invention relates to an intercommunication device of the type comprising an audio communication device and an assistive device for hearing-impaired people which is configured to generate a magnetic field which can be received by an acoustic prosthesis.

The majority of acoustic aids has integrated, in addition to the conventional microphone, a receiver with a magnetic induction coil. Such a magnetic induction coil is intended to allow the acquisition of an audio signal in the acoustic prosthesis by means of the integrated coil or, where applicable, simultaneously by means of the microphone and the coil.

To this end, there is installed in areas and public locations or in specific devices, such as door-phones, ATMs, etc., a magnetic induction installation which allows the generation of a magnetic field which can be detectable by the acoustic prosthesis.

In fact, the acoustic aids provided with such functionality comprise in turn a coil type receiver which, if it is located inside the area affected by the magnetic field, can receive the signal and generate a current which is converted into an audio signal. An intercom device with a magnetic induction loop coil for hearing-impaired people is e.g. disclosed in JP 2011 071894 A.

The advantage of such technology involves avoiding the presence of background noise which may be present in the open locations and receiving the audio signal directly from the device which the wearer of the acoustic prosthesis is using without it becoming propagated into the environment.

The need for generating a magnetic field which is detectable from the exterior involves some limitations in terms of the materials and components which can be used in the devices provided with the magnetic induction installations described above.

In fact, as a result of the phenomenon of eddy currents, using metal plates, particularly when they are constructed from materials which have optimum properties of conduction, can generate interference phenomena in the installations.

This particularly constitutes a disadvantage in the case of devices which can be installed outside, such as, for example, door-phones for residential use, in which the use of a cover which is formed by a metal plate, in particular made of steel, is desirable in order to confer on the device resistance to agents and external loads and an attractive appearance.

The problem addressed by the present invention is to provide an intercommunication device, such as, for example, a door-phone for outdoors, which is functionally and structurally configured so as to allow one or more of the disadvantages set out with reference to the cited prior art to be at least partially overcome.

In the context of this problem, an object of the present invention is to provide an intercommunication device, in which the phenomenon of eddy currents does not compromise the correct operation of the magnetic induction installation.

Another object is to provide an intercommunication device which is provided with an assistive device for hearing-impaired people, in which the presence of such a device does not have a negative effect on the aesthetic appearance and the robustness of the product.

This problem is solved and these objects are at least partially achieved by the invention by means of an intercommunication device comprising a communication device according to claim 1.

The Applicant has observed that the presence of the lightening blind recesses allows the limitation of the phenomenon of eddy currents and, at the same time, since the recesses are not through-recesses through the plate, such presence prevent them from having a negative effect on the external appearance of the product and does not affect the mechanical strength in an excessively significant manner.

Preferably, the lightening blind recesses are of elongate form.

In some embodiments, the assistive device for hearing-impaired people is arranged in an internal zone, preferably a substantially central zone, of the cover plate. On the basis of this arrangement, there is advantageously defined a peripheral region in the cover plate between the assistive device for hearing-impaired people and the external edges of the cover plate itself.

On the basis of another aspect, the lightening recesses are formed at the peripheral region which ideally may surround the assistive device for hearing-impaired people.

Preferably, the lightening blind recesses which are arranged near the sides of the plate develop in an inclined direction with respect to a vertical axis.

In other words, in a zone adjacent to the sides of the plate, the lightening recesses are inclined.

On the basis of another aspect, in a central zone which can, for example, be between the lateral zones in which the recesses are inclined, there may be provided lightening blind recesses with a vertical development, that is to say, which develop in a direction substantially parallel with the vertical axis.

It will be appreciated that these aspects contribute to optimizing the action of opposing the formation of eddy currents, by constituting preferred forms and arrangements for the lightening blind recesses. The Applicant has observed that this arrangement is particularly advantageous if the assistive device for hearing-impaired people is arranged in the upper zone of the intercommunication device and is arranged to be substantially central in the horizontal extent direction of the device. To this end, it will be appreciated that the intercommunication device provides for a unique installation position which a person skilled in the art will be capable of appreciating, thereby defining in an unambiguous manner the vertical direction, and the relative up/down positioning, and the horizontal direction.

On the basis of yet another aspect, the lightening blind recesses are formed in the cover plate in a region facing the assistive device for hearing-impaired people. In this case, the lightening blind recesses which may be present in this region can be orientated substantially perpendicularly to the vertical axis.

Preferably, the lightening recesses extend over a depth greater than half of the total thickness of the cover plate in such a manner that the presence thereof can be sufficiently significant in order to counteract eddy currents.

According to the invention, the cover plate comprises two superimposed layers. Of those layers, a first internal layer has a plurality of through-openings. A second external layer, which during use is superimposed on the internal layer, defines respective base walls which together with the through-openings form the lightening blind recesses.

According to the invention, the first layer and the second layer are constructed from the same material.

The first internal layer and the second external layer are preferably formed as structurally different elements.

In some embodiments, the cover plate comprises connection means, for example, a weld or mechanical connections, which are capable of joining the first layer to the second layer.

These aspects of the invention contribute to allowing a simple construction of the cover plate, allowing the different processing operations to be carried out, aesthetic finishing for the external layer and producing the openings for the internal layer, in an independent manner. Furthermore, the processing of the two layers may be carried out in an independent manner without the risk that the processing of the recesses may thereby have negative influences on the aesthetic characteristics of the external face of the intercommunication device.

In some embodiments, the first layer and/or the second layer is/are constructed from steel.

According to another aspect, the intercommunication device comprises a housing covering which defines a volume which is configured to receive therein the communication device and the assistive device for hearing-impaired people. Preferably, the housing covering comprises a plurality of notches which are formed in one or more of the walls thereof. In some embodiments, the notches are formed in the lateral walls of the covering, corresponding to the walls which extend parallel with the vertical direction of the device.

In preferred embodiments, these notches have a horizontal development, that is to say, they can extend perpendicularly to the vertical direction of the intercommunication device. Preferably, the notches extend between opposite sides of the lateral walls of the covering.

Other preferred aspects are also defined in the appended claims.

The features and other advantages of the invention will be better appreciated from the following detailed description of a preferred though non-limiting embodiment thereof which is illustrated by way of non-limiting example with reference to the appended drawings, in which:
- Figure 1 is an exploded, perspective view of an intercommunication device according to the present invention;
- Figures 2A and 2B are two perspective views, a front view and a rear view, of a cover plate of the intercommunication device of the present invention;
- Figure 3 is a rear view of the cover plate of Figures 2A and 2B;
- Figures 4 and 4A are a side view and a respective detail, the detail being taken along the section A-A, of the cover plate of Figure 3;
- Figure 5 is an exploded, perspective view of the cover plate of the intercommunication device of the present invention; and
- Figure 6 is a perspective view of a housing covering of the intercommunication device of the present invention.

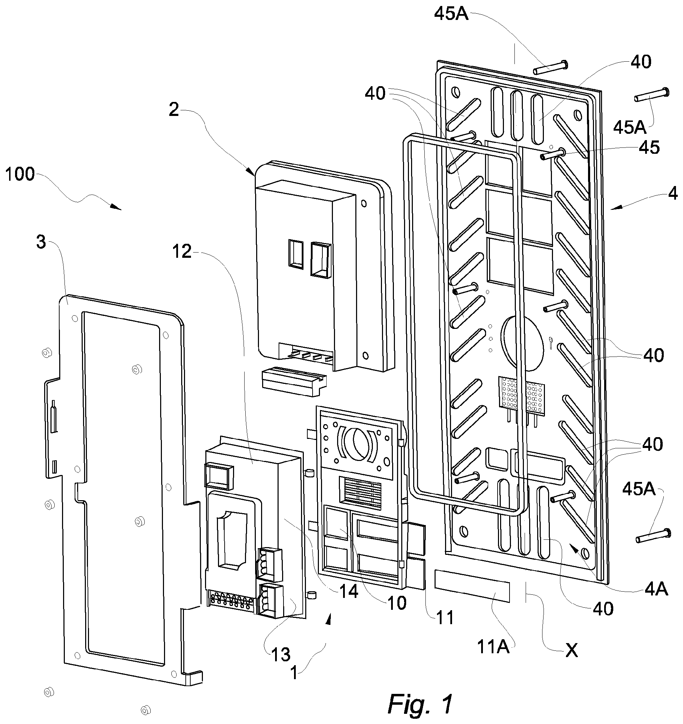

Initially with reference to Figure 1, an intercommunication device, for example, a door-phone for residential, commercial or industrial use, is generally designated 100.

The intercommunication device 100 of the present invention comprises a communication device 1 which is configured to receive an audio signal from a remote terminal. By way of example, in the embodiment illustrated in Figure 1, in which the device 100 is a video door-phone, the communication device 1 is configured to receive an audio signal from a remote station, for example, a terminal of the intercommunication system arranged in an apartment, and to emit it to the surrounding environment by means of a loudspeaker 14.

At the same time, the communication device 1 is advantageously also intended to transmit to the remote station an audio signal which may be combined with a video signal, which is acquired externally. To this end, the communication device 1 may comprise a video device 12 which is only schematically illustrated in the Figures.

In some embodiments, the communication device 1 may further comprise a button panel 10 in order to emit a control warning signal and a door plate 11 which is intended to receive a plate 11A. Preferably, the door plate 11 has a lateral opening, through which a plate 11A can be inserted by causing it to slide laterally.

Preferably, the communication device 1 also comprises a control board 13 for controlling one or more of the above-described components.

Advantageously, the intercommunication device 100 of the present invention further comprises an assistive device 2 for hearing-impaired people which is configured to generate a magnetic field which can be received by an acoustic prosthesis. Therefore, this assistive device 2 for hearing-impaired people allows the transmission of the audio signal to the prosthesis not only by means of the loudspeaker 14 but also by means of a magnetic induction system as a result of the detection of the magnetic field generated by the assistive device 2 for hearing-impaired people.

Preferably, the assistive device 2 for hearing-impaired people is arranged in the region of an upper portion of the intercommunication device 100 and, even more preferably, in a vertically upper position with respect to the communication device 1.

In some embodiments, the communication device 1 and the assistive device 2 for hearing-impaired people are supported by means of a support structure 3 which is only schematically depicted in the Figures and which allows these devices to be received in a suitable seat which is intended for the intercommunication device 100. For example, the intercommunication device 100 may be of the type which can be wall-mounted.

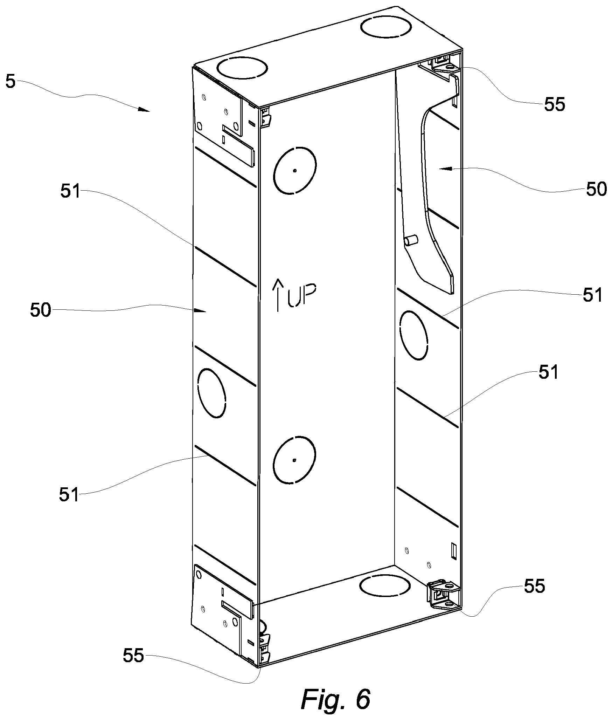

Advantageously, the intercommunication device 100 comprises a housing covering 5 which is illustrated, in an exemplary embodiment thereof, in Figure 6. The housing covering 5 preferably has a box-shaped form and defines a volume, inside which the components previously mentioned can be received.

The covering 5 is preferably constructed in a box-shaped manner for wall-mounting, allowing this type of installation for the device 100.

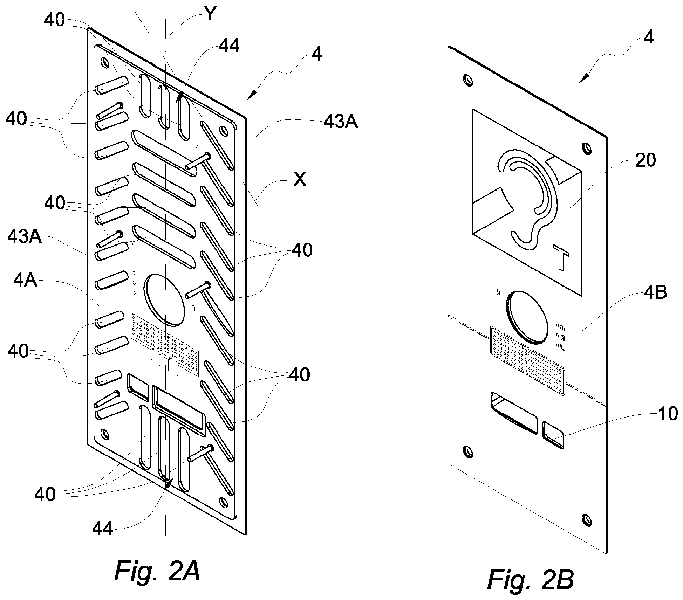

The intercommunication device 100 further comprises a cover plate 4 which defines an external face 4B which is directed during use towards the exterior of the device 100. It will be appreciated that, in the present embodiment, the external face 4B, which is illustrated more clearly in Figure 2B, corresponds to the operating side of the device 100, from which the button panel 10 is accessible.

The cover plate 4 is advantageously configured so as to be connected to the housing covering 5 so as to obtain a closed structure, inside which there can be received the components set out above. In some embodiments, there can be provided connection elements 45A between the plate 4 and the covering 5, for example, which are constructed in the form of threaded screws which engage in respective seats 55. In turn, in some embodiments, the cover plate 4 can be connected to the support structure 3 by means of respective threaded pins 45, which are also illustrated in the embodiment of Figure 1.

With reference instead to Figure 2B, in preferred embodiments, a symbol which identifies, including from the exterior, the presence of the assistive device 2 for hearing-impaired people is also illustrated on the external face 4B of the cover plate 4.

Opposite the external face 4b, the cover plate 4 also defines an internal face 4A which is directed towards the assistive device 2 for hearing-impaired people.

In fact, it will be appreciated that the assistive device 2 for hearing-impaired people is arranged in a position near the cover plate 4 in such a manner that the magnetic field generated thereby can be detected, with sufficient intensity, outside the intercommunication device 100.

It may also be noted that the assistive device 2 for hearing-impaired people is preferably arranged in the region of a central zone, in a horizontal direction, of the cover plate 4, or more generally of an internal zone thereof. In this manner, when the assistive device 2 for hearing-impaired people faces the plate 4, there remains ideally defined in the cover plate 4 a peripheral region which is contained between the zone which the assistive device 2 for hearing-impaired people faces and external edges 43 of the plate 4 itself. Consequently, the cover plate 4 has a planar extent which is greater with respect to the extent covered by the assistive device 2 for hearing-impaired people so as to leave the above-mentioned peripheral region defined.

In some embodiments, the cover plate 4 is of elongate form, with a predominant extent dimension, that is to say, greater dimension, which defines a main axis Y.

It will further be observed that, at a general level, the intercommunication device 100 is constructed so as to define in an unambiguous manner a vertical axis V. For example, this orientation may derive from the methods for installation provided for or the orientation of the video device used. In some embodiments, the main axis Y coincides with the vertical axis V.

It may further be noted that there can be defined main sides 43A of the cover plate parallel with the vertical axis V on the basis of the above-mentioned definition.

The intercommunication device 100 of the present invention further comprises a plurality of lightening blind recesses 40 which are formed in the plate 4 in the region of the internal face 4A thereof. As mentioned above, the presence of these recesses allows a limitation of the interference action which the eddy currents would have on the induction system. However, the external face 4B of the plate 4 is not affected by the recesses and the presence of the recesses 40 is not thereby visually appreciable from the exterior.

According to another aspect of the invention, the housing covering 5 may comprise, still in order to limit the negative influence of the eddy currents in the device 100, a plurality of notches 50, which are preferably blind notches, that is to say, not through-notches, in one or more of the walls thereof.

The cover plate 40 is made from a metal material, advantageously from steel, so as to be resistant to the external agents. Now, examining in detail the preferred characteristics of the lightening blind recesses 40, they may be of elongate form.

The same selection of materials may also be provided for the housing covering 5 and, advantageously, the covering 5 may be made of the same material as the cover plate 40.

The arrangement and orientation of the recesses 40 may vary in accordance with the positioning of the recess in the internal face 4A.

In some embodiments, the peripheral region of the face 4A defined around the assistive device 2 for hearing-impaired people has the lightening recesses 40.

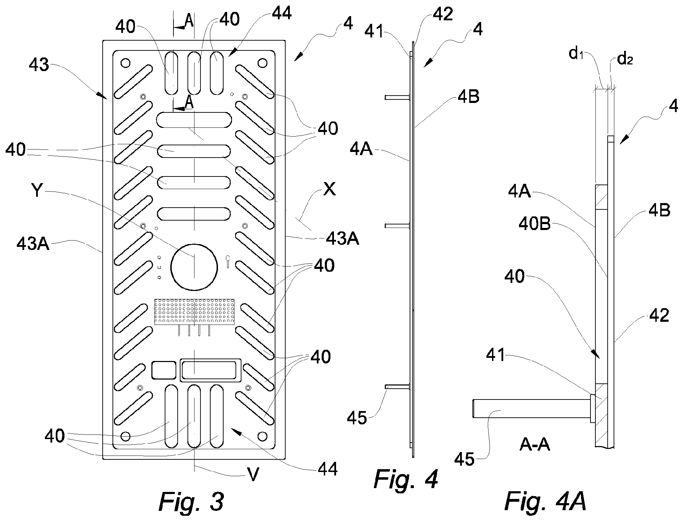

Preferably, as may be observed in particular in Figure 3, there are provided lightening blind recesses 40 near the main sides 43A. In this position, the lightening blind recesses 40 preferably extend in an inclined direction X with respect to the vertical axis V. The inclination may advantageously be, for example, between 15° and 75° with respect to the vertical axis V.

The Applicant has observed that this arrangement is particularly effective in order to combat the influences of the eddy currents with the arrangement illustrated above, that is to say, in which the assistive device 2 is in the upper zone of the device. Furthermore, the use of inclinations between 15° and 75° is particularly advantageous if the device is of elongate form in order to obtain an effective compromise between spatial requirements and ability to combat the eddy currents.

In some embodiments, there are provided recesses 40 in the central zone 44 of the peripheral region interposed between the main sides 43A. The central zone 44 may optionally be adjacent to the upper and lower sides of the plate 4, respectively. Preferably, in the above-mentioned zones 44 the lightening blind recesses 40 extend in a direction substantially parallel with the vertical axis V.

The Applicant has observed that this orientation is also particularly advantageous, these recesses of the central zone being vertically aligned with the assistive device 2.

According to another aspect of the invention, the lightening blind recesses 40 can be formed in the cover plate 4 in a region thereof facing the assistive device 2 for hearing-impaired people, that is to say, in a region covered by the assistive device 2 for hearing-impaired people.

Preferably, in this region, the lightening blind recesses 40 are substantially perpendicular to the vertical axis V. These recesses further serve to improve the connection with respect to the acoustic prosthesis, forming a lightening in the relevant connection zone, and can advantageously have greater dimensions than those of the other recesses 40 present.

It will be appreciated that, in the example illustrated in the Figures, the plate 4 comprises recesses which are arranged in all the positions set out above. In any case, there may also be provided different combinations, although they are less effective at containing the phenomenon of eddy currents. Furthermore, if the intercommunication device has different characteristics, for example, in terms of predominant development and positioning of the devices present therein, the recesses may also be constructed in different positions.

Now with reference to Figure 6, in some embodiments the notches 51 of the covering 5 are formed in the lateral walls 50 thereof. It will be appreciated that these lateral walls 50 correspond to the walls which extend parallel with the vertical direction V of the device 100.

In preferred embodiments, these notches 51 have a horizontal development, that is to say, they extend perpendicularly to the vertical direction of the intercommunication device 100. Preferably, the notches 51 extend between opposite sides of the lateral walls 50 of the covering 5.

As can now be better observed in Figure 4A, from the constructive point of view, the lightening blind recesses 40 preferably extend over a depth greater than half of the total thickness of the cover plate 4.

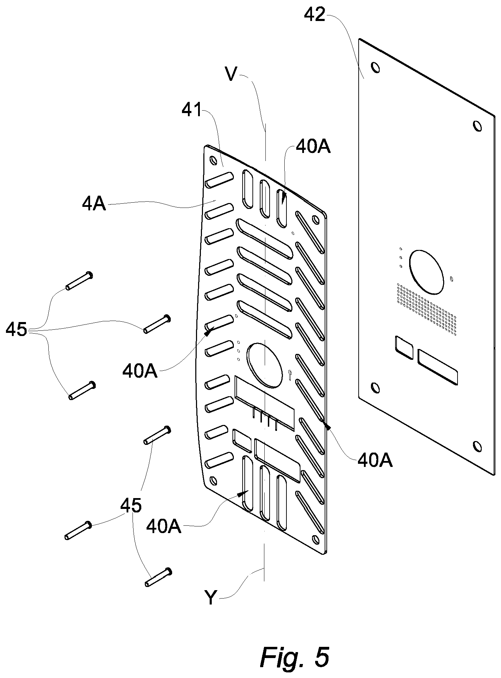

Also with reference to Figure 5, in some embodiments the cover plate 4 comprises two superimposed layers 41, 42 which have a thickness d1 and d2, respectively.

Advantageously, a first internal layer 41 of these superimposed layers has a plurality of through-openings 40A while a second external layer 42, which during use is superimposed on the internal layer 41, defines respective base walls 40B.

Preferably, the through-openings 40A, together with the respective base walls 40B, form the lightening blind recesses 40 of the plate of the present invention.

In some embodiments, the thickness d1 is equal to at least double the thickness d2.

The two layers may be both identified ideally in the plate and formed as structurally different elements which are joined during construction. To this end, there may be provision for the presence of connection means which are also formed by a weld between the two layers which is capable of joining the first layer 41 to the second layer 42.

On the basis of another aspect, the assistive device 2 for hearing-impaired people may also provide for frequency filtering of the signal which is transmitted thereby and which is intended to be received by the acoustic prosthesis. This characteristic is also found to be advantageous for further compensating for the losses generated by the eddy currents according to what is described above. To this end, the assistive device 2 for hearing-impaired people may comprise an electronic filter which is configured for the filtering mentioned above. Using such a filter in fact allows optimization of the function of the blind recesses, by advantageously filtering the signal.

The invention thereby solves the problem set out, at the same time achieving a plurality of advantages. In particular, the cover plate used in the intercommunication device according to the present invention limits the problems linked with the use of metal materials if induction systems are present for assisting hearing-impaired people. This solution is therefore preferably used in door-phones and video door-phones, but it will be appreciated that it may also be used in other solutions in which an induction system is installed for assisting hearing-impaired people.

## Claims

1. An intercommunication device (100) comprising a communication device (1) which is configured to receive an audio signal from a remote terminal, an assistive device (2) for hearing-impaired people which is configured to generate a magnetic field which can be received by an acoustic prosthesis, a support structure (3) which is configured to support the communication device (1) and the assistive device (2) for hearing-impaired people, the intercommunication device (100) further comprising a cover plate (4) which defines an internal face (4A) which is directed towards the assistive device (2) for hearing-impaired people and an external face (4B) which is opposite the internal face (4A) and which is directed during use towards the exterior of the intercommunication device (100), **characterized in that** the cover plate (4) comprises, on the internal face (4A), a plurality of lightening blind recesses (40), said cover plate (4) being made from a metal conductive material and comprising two superimposed layers (41, 42), a first internal layer (41) of said two superimposed layers having a plurality of through-openings (40A) while a second external layer (42) of said two superimposed layers, which during use is superimposed on the first internal layer (41), defines respective base walls (40B), wherein said through-openings (40A), together with the respective base walls (40B), form said lightening blind recesses (40), said first internal layer (41) and said second external layer (42) being constructed from the same material.

2. An intercommunication device (100) according to claim 1, wherein the lightening blind recesses (40) are of elongate form.

3. An intercommunication device (100) according to any one of the preceding claims, wherein the intercommunication device (100) is configured so as to define during use a vertical axis (V), and main sides (43A) of the cover plate being defined parallel to the vertical axis (V).

4. An intercommunication device (100) according to claim 3, wherein the cover plate (4) defines external edges (43) and wherein the assistive device (2) for hearing-impaired people is arranged at an internal zone of the cover plate (4) so as to define a peripheral region in the cover plate (4) between the assistive device for hearing-impaired people and said external edges (43) of the cover plate, and wherein the lightening blind recesses (40) include lightening blind recesses formed in the peripheral region.

5. An intercommunication device (100) according to claims 3 and 4, wherein the lightening blind recesses (40) include lightening blind recesses arranged along the main sides (43A) and develop in an inclined direction (X) with respect to the vertical axis (V), said inclined direction (X) forming an angle comprised between 15° and 75° with respect to said vertical axis (V).

6. An intercommunication device (100) according to claim 4 or 5, wherein the lightening blind recesses (40) include lightening blind recesses which develop in a direction substantially parallel with the vertical axis (V) in a central zone (44) of the peripheral region interposed between the main sides (43A).

7. An intercommunication device (100) according to any one of claims 4 to 6, wherein the lightening blind recesses (40) include lightening blind recesses formed in a region facing the assistive device (2) for hearing-impaired people and having a greater extent than the other lightening blind recesses (40).

8. An intercommunication device (100) according to claim 7, wherein the lightening blind recesses formed in the region facing the assistive device (2) for hearing-impaired people are substantially perpendicular to the vertical axis (V).

9. An intercommunication device (100) according to any one of the preceding claims, wherein the cover plate (4) is of elongate form, with a predominant extent dimension which defines a main axis (Y) parallel with the vertical axis (V).

10. An intercommunication device (100) according to any one of the preceding claims, wherein the lightening blind recesses (40) extend over a depth greater than half of the total thickness of the cover plate (4).

11. An intercommunication device (100) according to any one of the claims 1 to 10, wherein the first internal layer (41) and the second external layer (42) are formed as structurally different elements, the cover plate (4) comprising connection means which are capable of joining the first internal layer (41) to the second external layer (42).

12. An intercommunication device (100) according to any one of the preceding claims, comprising a housing covering (5) which defines a volume which is configured to receive therein the communication device (1) and the assistive device (2) for hearing-impaired people, the housing covering (5) comprising a plurality of notches (51) in one or more of the walls (50) thereof.

13. An intercommunication device (100) according to any one of the preceding claims, wherein the assistive device (2) for hearing-impaired people is arranged in an upper zone of the intercommunication device (100), the communication device (1) preferably being arranged in a lower position with respect to the assistive device (2) for hearing-impaired people.

14. An intercommunication device (100) according to any one of the preceding claims, wherein the assistive device (2) for hearing-impaired people has an electronic filter which is configured for frequency filtering of the signal which is transmitted by the assistive device (2) for hearing-impaired people.

## Patentansprüche

1. Kommunikationsanlage (100) mit einer Kommunikationsvorrichtung (1), die zum Empfangen eines Audiosignals von einem entfernten Endgerät eingerichtet ist, mit einer Unterstützungsvorrichtung (2) für Hörgeschädigte, die zum Erzeugen eines Magnetfelds eingerichtet ist, das von einer akustischen Prothese empfangen werden kann, mit einer Tragstruktur (3), die zum Tragen der Kommunikationsvorrichtung (1) und der Unterstützungsvorrichtung (2) für Hörgeschädigte eingerichtet ist, wobei die Kommunikationsanlage (100) ferner eine Abdeckplatte (4) aufweist, die eine Innenfläche (4A), die der Unterstützungsvorrichtung (2) für Hörgeschädigte zugewandt ist, und eine Außenfläche (4B) bildet, die der Innenfläche (4A) gegenüberliegt und während der Anwendung der Außenseite der Kommunikationsanlage (100) zugewandt ist, **dadurch gekennzeichnet, dass** die Abdeckplatte (4) auf der Innenfläche (4A) eine Mehrzahl von gewichtsreduzierenden Sacklöchern (40) aufweist, wobei die Abdeckplatte (4) aus einem metallisch leitfähigen Material hergestellt ist und zwei übereinanderliegende Schichten (41, 42) aufweist, wobei eine erste innere Schicht (41) der beiden übereinanderliegenden Schichten eine Mehrzahl von Durchgangsöffnungen (40A) aufweist, während eine zweite äußere Schicht (42) der beiden übereinanderliegenden Schichten, die während der Anwendung auf der ersten inneren Schicht (41) aufliegt, jeweilige Bodenwände (40B) bildet, wobei die Durchgangsöffnungen (40A) zusammen mit den jeweiligen Bodenwänden (40B) die gewichtsreduzierenden Sacklöcher (40) bilden, wobei die erste innere Schicht (41) und zweite äußere Schicht (42) aus demselben Material hergestellt sind.

2. Kommunikationsanlage (100) nach Anspruch 1, wobei die gewichtsreduzierenden Sacklöcher (40) eine längliche Form aufweisen.

3. Kommunikationsanlage (100) nach einem der vorhergehenden Ansprüche, wobei die Kommunikationsanlage (100) eingerichtet ist, um während der Anwendung eine vertikale Achse (V) zu bilden, und die Hauptseiten (43A) der Abdeckplatte parallel zur vertikalen Achse (V) verlaufen.

4. Kommunikationsanlage (100) nach Anspruch 3, wobei die Abdeckplatte (4) Außenkanten (43) aufweist und die Unterstützungsvorrichtung (2) für Hörgeschädigte in einem inneren Bereich der Abdeckplatte (4) angeordnet ist, um einen Randbereich in der Abdeckplatte (4) zwischen der Unterstützungsvorrichtung für Hörgeschädigte und den Außenkanten (43) der Abdeckplatte zu bilden, und wobei die gewichtsreduzierenden Sacklöcher (40) gewichtsreduzierende Sacklöcher umfassen, die im Randbereich ausgebildet sind.

5. Kommunikationsanlage (100) nach den Ansprüchen 3 und 4, wobei die gewichtsreduzierenden Sacklöcher (40) gewichtsreduzierende Sacklöcher umfassen, die entlang der Hauptseiten (43A) angeordnet sind und sich in eine geneigte Richtung (X) in Bezug auf die vertikale Achse (V) erstrecken, wobei die geneigte Richtung (X) einen Winkel zwischen 15° und 75° in Bezug auf die vertikale Achse (V) bildet.

6. Kommunikationsanlage (100) nach Anspruch 4 oder 5, wobei die gewichtsreduzierenden Sacklöcher (40) gewichtsreduzierende Sacklöcher umfassen, die sich in einem zentralen Bereich (44) des zwischen den Hauptseiten (43A) liegenden Randbereichs im Wesentlichen parallel zur vertikalen Achse (V) erstrecken.

7. Kommunikationsanlage (100) nach einem der Ansprüche 4 bis 6, wobei die gewichtsreduzierenden Sacklöcher (40) gewichtsreduzierende Sacklöcher umfassen, die in einem der Unterstützungsvorrichtung (2) für Hörgeschädigte zugewandten Bereich ausgebildet sind und eine größere Ausdehnung als die anderen gewichtsreduzierenden Sacklöcher (40) aufweisen.

8. Kommunikationsanlage (100) nach Anspruch 7, wobei die gewichtsreduzierenden Sacklöcher, die in dem der Unterstützungsvorrichtung (2) für Hörgeschädigte zugewandten Bereich ausgebildeten sind, im Wesentlichen senkrecht zur vertikalen Achse (V) verlaufen.

9. Kommunikationsanlage (100) nach einem der vorhergehenden Ansprüche, wobei die Abdeckplatte (4) eine längliche Form mit einer überwiegenden Ausdehnungsdimension aufweist, die eine Hauptachse (Y) parallel zur vertikalen Achse (V) bildet.

10. Kommunikationsanlage (100) nach einem der vorhergehenden Ansprüche, wobei sich die gewichtsreduzierenden Sacklöcher (40) über eine Tiefe erstrecken, die größer als die Hälfte der Gesamtdicke der Abdeckplatte (4) ist.

11. Kommunikationsanlage (100) nach einem der Ansprüche 1 bis 10, wobei die erste innere Schicht (41) und zweite äußere Schicht (42) als strukturell unterschiedliche Elemente ausgebildet sind, wobei die Abdeckplatte (4) Verbindungsmittel aufweist, die in der Lage sind, die erste innere Schicht (41) mit der zweiten äußeren Schicht (42) zu verbinden.

12. Kommunikationsanlage (100) nach einem der vorhergehenden Ansprüche mit einer Gehäuseabdeckung (5), die ein Volumen bildet, das zur Aufnahme der Kommunikationsanlage (1) und der Unterstützungsvorrichtung (2) für Hörgeschädigte eingerichtet ist, wobei die Gehäuseabdeckung (5) eine Mehrzahl von Kerben (51) in einer oder mehreren ihrer Wände (50) aufweist.

13. Kommunikationsanlage (100) nach einem der vorhergehenden Ansprüche, wobei die Unterstützungsvorrichtung (2) für hörgeschädigte Personen in einem oberen Bereich der Kommunikationsanlage (100) angeordnet ist, wobei die Kommunikationsvorrichtung (1) vorzugsweise in einer unteren Position in Bezug auf die Unterstützungsvorrichtung (2) für hörgeschädigte Personen angeordnet ist.

14. Kommunikationsanlage (100) nach einem der vorhergehenden Ansprüche, wobei die Unterstützungsvorrichtung (2) für hörgeschädigte Personen einen elektronischen Filter aufweist, der zur Frequenzfilterung des Signals eingerichtet ist, das durch die Unterstützungsvorrichtung (2) für hörgeschädigte Personen übertragen wird.

## Revendications

1. Dispositif d'intercommunication (100) comprenant un dispositif de communication (1) configuré pour recevoir un signal audio d'un terminal distant, un dispositif d'assistance (2) pour malentendants configuré pour générer un champ magnétique pouvant être reçu par une prothèse acoustique, une structure de support (3) configurée pour supporter le dispositif de communication (1) et le dispositif d'assistance (2) pour malentendants, le dispositif d'intercommunication (100) comprenant en outre une plaque de recouvrement (4) qui définit une face interne (4A) orientée vers le dispositif d'assistance (2) pour malentendants et une face externe (4B) opposée à la face interne (4A) et orientée vers l'extérieur du dispositif d'intercommunication (100) en cours d'utilisation, **caractérisé en ce que** la plaque de recouvrement (4) comprend, sur la face interne (4A), une pluralité de trous borgnes d'allègement (40), ladite plaque de recouvrement (4) étant fabriquée à partir d'un matériau conducteur métallique et comprenant deux couches superposées (41, 42), une première couche interne (41) desdites deux couches superposées présentant une pluralité d'ouvertures traversantes (40A) tandis qu'une seconde couche externe (42) desdites deux couches superposées, qui, en cours d'utilisation, est superposée à la première couche interne (41), définit des parois de base (40B) respectives, dans lesquelles lesdites ouvertures traversantes (40A), ainsi que les parois de base (40B) respectives, forment lesdits trous borgnes d'allègement (40), ladite première couche interne (41) et ladite seconde couche externe (42) étant construites à partir du même matériau.

2. Dispositif d'intercommunication (100) selon la revendication 1, dans lequel les trous borgnes d'allègement (40) sont de forme allongée.

3. Dispositif d'intercommunication (100) selon l'une quelconque des revendications précédentes, dans lequel le dispositif d'intercommunication (100) est configuré de manière à définir en cours d'utilisation un axe vertical (V), et les côtés principaux (43A) de la plaque de recouvrement étant définis parallèlement à l'axe vertical (V).

4. Dispositif d'intercommunication (100) selon la revendication 3, dans lequel la plaque de recouvrement (4) définit des bords extérieurs (43) et dans lequel le dispositif d'assistance (2) pour malentendants est disposé dans une zone interne de la plaque de recouvrement (4) de manière à définir une région périphérique dans la plaque de recouvrement (4) entre le dispositif d'assistance pour malentendants et lesdits bords extérieurs (43) de la plaque de recouvrement, et dans lequel les trous borgnes d'allègement (40) comprennent des trous borgnes d'allègement formés dans la région périphérique.

5. Dispositif d'intercommunication (100) selon les revendications 3 et 4, dans lequel les trous borgnes d'allègement (40) comprennent des trous borgnes d'allègement disposés le long des côtés principaux (43A) et se développant dans une direction inclinée (X) par rapport à l'axe vertical (V), ladite direction inclinée (X) formant un angle compris entre 15° et 75° par rapport audit axe vertical (V).

6. Dispositif d'intercommunication (100) selon la revendication 4 ou 5, dans lequel les trous borgnes d'allègement (40) comprennent des trous borgnes d'allègement qui se développent dans une direction sensiblement parallèle à l'axe vertical (V) dans une zone centrale (44) de la région périphérique interposée entre les côtés principaux (43A).

7. Dispositif d'intercommunication (100) selon l'une quelconque des revendications 4 à 6, dans lequel les trous borgnes d'allègement (40) comprennent des trous borgnes d'allègement formés dans une région faisant face au dispositif d'assistance (2) pour malentendants et ayant une plus grande étendue que les autres trous borgnes d'allègement (40).

8. Dispositif d'intercommunication (100) selon la revendication 7, dans lequel les trous borgnes d'allègement formés dans la région faisant face au dispositif d'assistance (2) pour malentendants sont sensiblement perpendiculaires à l'axe vertical (V).

9. Dispositif d'intercommunication (100) selon l'une quelconque des revendications précédentes, dans lequel la plaque de recouvrement (4) est de forme allongée, avec une dimension d'extension prédominante qui définit un axe principal (Y) parallèle à l'axe vertical (V).

10. Dispositif d'intercommunication (100) selon l'une quelconque des revendications précédentes, dans lequel les trous borgnes d'allègement (40) s'étendent sur une profondeur supérieure à la moitié de l'épaisseur totale de la plaque de recouvrement (4).

11. Dispositif d'intercommunication (100) selon l'une quelconque des revendications 1 à 10, dans lequel la première couche interne (41) et la seconde couche externe (42) sont formées comme des éléments structurellement différents, la plaque de recouvrement (4) comprenant des moyens de connexion pouvant joindre la première couche interne (41) à la seconde couche externe (42).

12. Dispositif d'intercommunication (100) selon l'une quelconque des revendications précédentes, comprenant un revêtement de boîtier (5) qui définit un volume configuré pour recevoir le dispositif de communication (1) et le dispositif d'assistance (2) pour malentendants, le revêtement de boîtier (5) comprenant une pluralité d'encoches (51) dans une ou plusieurs de ses parois (50).

13. Dispositif d'intercommunication (100) selon l'une quelconque des revendications précédentes, dans lequel le dispositif d'assistance (2) pour malentendants est disposé dans une zone supérieure du dispositif d'intercommunication (100), le dispositif de communication (1) étant de préférence disposé dans une position inférieure par rapport au dispositif d'assistance (2) pour malentendants.

14. Dispositif d'intercommunication (100) selon l'une quelconque des revendications précédentes, dans lequel le dispositif d'assistance (2) pour malentendants comporte un filtre électronique configuré pour le filtrage en fréquence du signal transmis par le dispositif d'assistance (2) pour malentendants.
